# EUROPEAN PATENT APPLICATION

(11) **EP 2 490 317 A1**
(43) Date of publication of application: **22.08.2012**
(21) Application number: 10823193.7
(22) Date of filing: 13.10.2010
(51) Int. Cl.: H02J 9/06, H01M 10/44, H02J 7/00, H02J 7/34, H02J 13/00

(54) **POWER SOURCE DEVICE AND VEHICLE**

(30) Priority: 13.10.2009 JP 2009236390; 13.10.2009 JP 2009236391; 13.10.2009 JP 2009236392
(71) Applicant: Panasonic Corporation, Kadoma-shi Osaka 571-8501 (JP)
(72) Inventor: YUKIZANE, Ryota, Osaka-shi, Osaka 540-6207 (JP); KODAMA, Nobutaka, Osaka-shi, Osaka 540-6207 (JP); NOSAKA, Shigekiyo, Osaka-shi, Osaka 540-6207 (JP)
(74) Representative: Eisenführ, Speiser & Partner
(86) International application number: PCT/JP2010/006085
(87) International publication number: WO 2011/045925

(57) **Abstract**

Disclosed are a power source device and a vehicle having increased reliability as backup in the event of a power cut, even when the power of the vehicle is used during a power cut. A power cut backup system (1) comprises: a power source device (3) within a residence (2); and a vehicle (6) which can be connected with or isolated from the power source device (3) by way of a power cable (5). The power source device (3) transmits by way of the power cable (5) control information for controlling the vehicle (6) in the event of a power cut. The vehicle (6) supplies power for an accumulator (10) to the power source device (3) by way of the power cable (5) in accordance with the control information received, and reports to the power source device (3) information regarding the remaining charge of the accumulator (10). Furthermore, the power source device (3) supplies power from the accumulator (10) to each electrical appliance within the residence (2), for example, an electric light (2a), a television (2b), and an air conditioner (2c). A display device (9) displays information regarding the remaining charge of the accumulator (10).

## Description

### Technical Field

The present invention relates to a power source apparatus and vehicle that implement a power supply in the event of a power cut in a residence.

### Background Art

If the power source of a residence is cut off due to a power cut caused by a natural disaster such as a typhoon or earthquake, a resident becomes unable to use home electrical appliances such as lights, a television, and a telephone within the residence. Consequently, a power cut backup system has been proposed that supplies power to a minimal number of appliances, such as a telephone, for example, in the event of a power cut. In this power cut backup system, for example, in the event of a power cut, power is supplied from a power generation apparatus provided in the body of an internal-combustion-engine vehicle outside a residence (see Patent Literature 1, for example). An internal-combustion-engine vehicle has an engine that runs on a fuel such as gasoline.

### Citation List

### Patent Literature

PTL 1
   Patent HEI02-142329

### Summary of Invention

### Technical Problem

In a conventional power cut backup system, the engine of an internal-combustion-engine vehicle is started, and power is supplied from a power generation apparatus that generates electricity through the rotation of this engine. Consequently, a resident can accurately ascertain how much fuel remains by looking at the fuel gauge of an internal-combustion-engine vehicle, and reliability as a backup power source in the event of a power cut is high.

At the same time, electric vehicles are becoming increasingly popular as environment-friendly vehicles. In an electric vehicle, an accumulator is provided in the vehicle body, and a motor that is a drive apparatus is driven, and the wheels are rotated, using the power of this accumulator. Since this accumulator is of large capacity, its use as a backup power source can also be envisaged.

However, with an electric vehicle, accumulator consumption fluctuates greatly according to the running state, making it difficult to predict the remaining accumulator power from the distance traveled or the like as compared with an internal-combustion-engine vehicle. Consequently, if the charge level is insufficient when power is supplied from a vehicle to a residence in the event of a power cut, power cannot continue to be supplied to the residence, and neither can the electric vehicle be used, presenting a problem of low reliability as a backup power source in the event of a power cut.

Thus, it is an object of the present invention to improve reliability as a backup in the event of a power cut, even when the power of a vehicle is used in the event of a power cut.

### Solution to Problem

In order to achieve this object, a power source apparatus of the present invention can be connected to a vehicle with power supplying capability via a power line, and is provided with: a power cut detection section that detects a power cut; a power line communication section that performs communication via the power line; and a power control section that transmits control information controlling a power supply provided by the vehicle to the vehicle using the power line communication section, based on a detection result of the power cut detection section.

Also, a vehicle of the present invention can be connected to a power source apparatus via a power line, and is provided with: an power storage section that stores power supplied from the power source apparatus; a power line communication section that performs communication via the power line; and a vehicle control section that controls power input/output of the power storage section based on control information transmitted from the vehicle and received using the power line communication section.

### Advantageous Effects of Invention

Since a power source apparatus of the present invention can be connected to a vehicle with power supplying capability via a power line, and is provided with a power cut detection section that detects a power cut, a power line communication section that performs communication via the power line, and a power control section that transmits control information controlling a power supply provided by the vehicle to the vehicle using the power line communication section, based on a detection result of the power cut detection section, the power source apparatus can transmit control information controlling the vehicle in the event of a power cut via the power line, and receive remaining vehicle accumulator charge information as well as receiving a power supply from the vehicle via the power line, and, for example, a resident can ascertain for how many hours vehicle power can be used by displaying received charge level information on a display apparatus or the like, and can take a power saving measure such as reducing the number of electrical appliances used when there is little remaining accumulator power. By this means, reliability as a backup in the event of a power cut can be improved, even when the power of a vehicle is used in the event of a power cut.

Also, since a vehicle of the present invention can be connected to a power source apparatus via a power line, and is provided with an power storage section that stores power supplied from the power source apparatus, a power line communication section that performs communication via the power line, and a vehicle control section that controls power input/output of the power storage section based on control information transmitted from the vehicle and received using the power line communication section, it is possible for a residence or the like to receive a supply of power from a vehicle in the event of a power cut.

### Brief Description of Drawings

FIG. 1 is a schematic configuration diagram of a power cut backup system according to an embodiment of the present invention;
FIG.2 is a block diagram showing the configuration of a power source apparatus of the above power cut backup system;
FIG.3 is an explanatory drawing of an example of display by a display apparatus in the above power cut backup system;
FIG. 4 is a schematic configuration diagram of a vehicle of the above power cut backup system;
FIG.5 is a block diagram showing the configuration of a vehicle of the above power cut backup system;
FIG.6 is a block diagram showing the configuration of an in-vehicle charging apparatus of a vehicle in the above power cut backup system;
FIG.7 is a flowchart explaining the operation of a power source apparatus of the above power cut backup system;
FIG. 8 is a flowchart explaining the operation of a vehicle of the above power cut backup system;
FIG.9 is a flowchart explaining a remaining vehicle accumulator charge display operation in the above power cut backup system;
FIG.10 is an explanatory drawing showing an example of remaining vehicle accumulator charge display in the above power cut backup system;
FIG.11 is an explanatory drawing showing another example of remaining vehicle accumulator charge display in the above power cut backup system;
FIG.12 is a block diagram showing the configuration of a power source apparatus in the above power cut backup system;
FIG. 13 is a block diagram showing the configuration of a power conversion section of a power source apparatus in the above power cut backup system;
FIG.14 is a block diagram showing the configuration of a vehicle in the above power cut backup system;
FIG. 15 is a schematic configuration diagram of a power cut backup system according to an embodiment of the present invention;
FIG. 16 is a front view of a vehicle;
FIG.17 is a configuration diagram of a rear-view mirror of a vehicle;
FIG. 18 is a configuration diagram showing a state in which the mirror part of the rear-view mirror shown in FIG. 17 has been opened;
FIG.19 is a cross-sectional view of a rear-view mirror of a vehicle;
FIG.20 is a configuration diagram showing another example of a rear-view mirror of a vehicle;
FIG.21 is an explanatory drawing of a direction indicator of a rear-view mirror of a vehicle; and
FIG.22 is an explanatory drawing of a device that performs power line communication of a vehicle.

### Description of Embodiment

Now, an embodiment of the present invention will be described with reference to the accompanying drawings. In the drawings, identical or equivalent parts are assigned the same reference codes.

### (Embodiment)

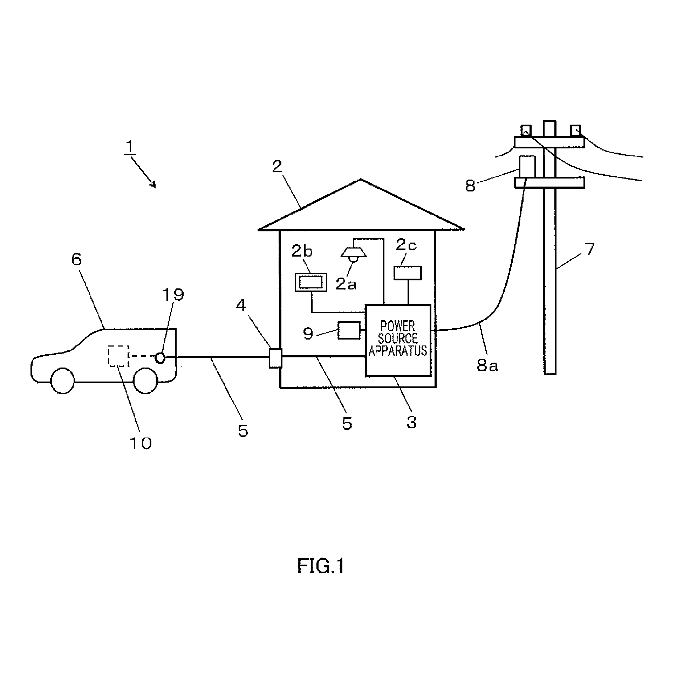

First, an outline description will be given of a power cut backup system according to this embodiment. FIG. 1 is a schematic configuration diagram of power cut backup system 1 according to an embodiment of the present invention.

As shown in FIG. 1, power source apparatus 3 in residence 2 is connected to power cable 8a running from transformer 8 provided on the top of utility pole 7 to the interior of the residence. By this means, power source apparatus 3 can use the power of a commercial power source supplied from an electric power company, and power can be supplied to electrical appliances in residence 2, such as light 2a, television 2b, and air conditioner 2c, for example. A commercial power source is distributed using a high-voltage alternating current in order to suppress power loss, and the voltage is converted to a predetermined voltage by transformer 8, and distributed to residence 2 converted to an alternating current with a voltage of 100 volts to 200 volts, for example.

However, if the residence 2 power source is cut off due to a power cut caused by a natural disaster such as a typhoon or earthquake, a resident becomes unable to use electrical appliances such as light 2a, television 2b, or air conditioner 2c in residence 2 shown in FIG. 1.

Thus, in power cut backup system 1, power source apparatus 3 in residence 2, and vehicle 6 that is connected to power source apparatus 3 in a connectable/disconncctable fashion via power line 5, are provided, and if the power supply to residence 2 stops, power is supplied to electrical appliances using power from vehicle 6.

An electric vehicle is used as vehicle 6. An electric vehicle has accumulator 10 and an electric motor functioning as a wheel driving section that rotates the wheels, and the motor is driven using charge power of accumulator 10. Vehicle 6 is not limited to an electric vehicle. For example, a hybrid vehicle employing both an internal combustion engine and an electric motor may be used.

Accumulator 10 of vehicle 6 does not need to be started like a power generation apparatus, and can therefore supply power immediately in the event of a power cut. By this means, power can be supplied to light 2a immediately after the occurrence of a natural disaster, even if the residence 2 power source is suddenly cut off during the night, for example, enabling a resident to check his or her safety while evacuating.

Also, since the amount of electricity with which accumulator 10 is charged (for example, 20 kWh to 50 kWh) is very great, in the event of a natural disaster, power used in residence 2 can be backed up until initial disaster recovery is started - that is, for several days until the safety of power facilities has been confirmed. For example, if the amount of electricity with which accumulator 10 is charged is 48 kWh, and the average amount of electricity used in residence 2 is 2 kWh, assuming that electrical appliances are used for 8 hours a day, power can be supplied to the electrical appliances in residence 2 from accumulator 10 for 3 days.

Thus, in power cut backup system 1 of this embodiment, power source apparatus 3 and vehicle 6 are connected in a connectable/disconnectable fashion via power line 5, and power in residence 2 is backed up using accumulator 10 of vehicle 6 in the event of a power cut.

Enclosure 4 is attached to the exterior of residence 2, and houses power line 5 connected to the power source in residence 2. A resident removes power line 5 with a power plug attached from enclosure 4, and connects the power plug of removed power line 5 to feed socket 19 of vehicle 6. Power source apparatus 3 and vehicle 6 can be connected in a connectable/disconnectable fashion by means of the power plug. By this means, vehicle 6 can be used independently, and can also supply (feed) vehicle 6 power to residence 2 in the event of a power cut.

Power source apparatus 3 transmits control information to vehicle 6 for switching between charging and discharging of vehicle 6, and vehicle 6 controls accumulator 10 input/output based on the received control information. That is to say, power source apparatus 3 controls switching of vehicle 6 charging and discharging operations by means of control information. Details of the control information will be given later herein.

Display apparatus 9 is connected to power source apparatus 3. This display apparatus 9 displays remaining charge information of accumulator 10 reported from vehicle 6 via power source apparatus 3. Provision may also be made for an amount of electricity used in residence 2 to be displayed on display apparatus 9. An example of the display of vehicle 6 remaining charge information of accumulator 10 and the method of reporting remaining charge information will be described later herein.

Next, the actual configurations of power source apparatus 3 and vehicle 6 of power cut backup system 1 will be described.

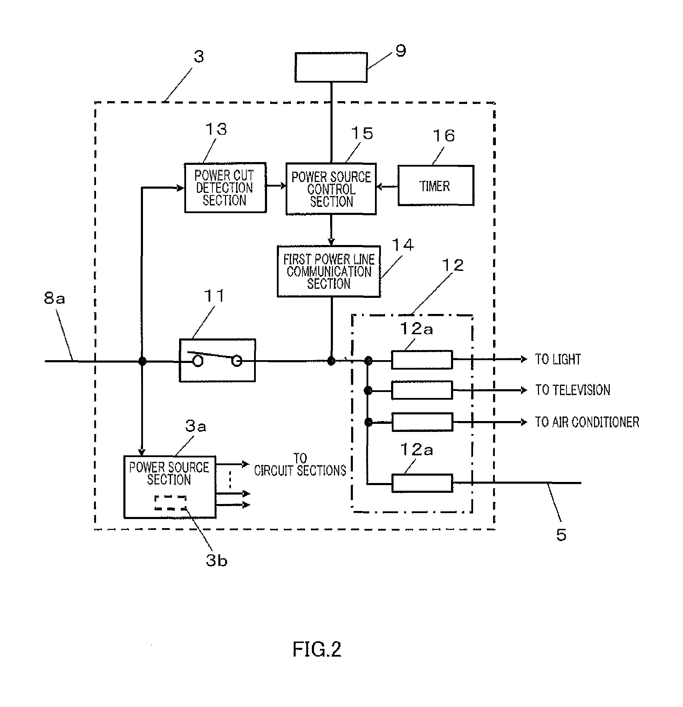

First, the configuration of power source apparatus 3 of power cut backup system 1 will be described. FIG.2 is a block diagram showing the configuration of power source apparatus 3 of power cut backup system 1 according to an embodiment of the present invention.

As shown in FIG.2, power source apparatus 3 connects power cable 8a and distribution panel 12 via connection section 11. Distribution panel 12 distributes power, and supplies the respective distributed power to electrical appliances in residence 2 via breakers 12a. Breakers 12a are apparatuses that automatically break a circuit if an abnormal current flows through them.

Connection section 11 connects or disconnects power cable 8a through which commercial power source power is supplied and distribution panel 12. When connection section 11 is open, the residence power source is disconnected from power cable 8a. Control of connection section 11 will be described later herein.

Power source apparatus 3 is provided with power source section 3a, and has small-capacity accumulator 3b in power source section 3a that can be charged with power. Accumulator 3b is charged when there is no power cut, and supplies power to circuit sections in the event of a power cut. By this means, power source apparatus 3 can operate even in the event of a power cut.

Now that the overall configuration of power source apparatus 3 is understood, the distinctive configuration of power source apparatus 3 will be described.

As shown in FIG.2, provision is made for power source apparatus 3 to back up power from vehicle 6 automatically in the event of a power cut. That is to say, power source apparatus 3 is provided with power cut detection section 13 that detects an interruption of power used in residence 2, first power line communication section 14 that communicates with vehicle 6 using power line 5, and power source control section 15 that transmits control information for controlling vehicle 6 via first power line communication section 14 based on a power cut detection result of power cut detection section 13, and transmits control information to vehicle 6 in the event of a power cut. Vehicle 6 controls accumulator 10 input/output based on received control information. The configuration of vehicle 6 will be described later herein.

If a power cut is detected by power cut detection section 13, power source control section 15 places connection section 11 in a non-connecting state and disconnects distribution panel 12 from power cable 8a. After disconnecting distribution panel 12 from power cable 8a, power source control section 15 transmits control information to vehicle 6, and causes power to be supplied to distribution panel 12 from vehicle 6. Through the disconnection of distribution panel 12 from power cable 8a, a collision between commercial power source power and vehicle 6 power is avoided, and the occurrence of a fire or the like due to such a collision is prevented, even if a commercial power source power cut is terminated while vehicle 6 power is being supplied within power source apparatus 3. By this means, the safety of power source apparatus 3 is improved.

Power source apparatus 3 is also provided with timer 16, which is a time counting section that counts time. While a power cut is being detected by power cut detection section 13, power source control section 15 counts the time by means of timer 16, and determines a case in which the counted time is greater than or equal to a predetermined time to be a power cut. For example, if the predetermined time is 0.5 second, power cut backup system I does not operate if power is cut only momentarily (for less than 0.5 second) due to a lightning strike. By this means, the safety and reliability of power cut backup system 1 are improved.

Display apparatus 9 displays remaining power information reported from vehicle 6 via power source apparatus 3. Display apparatus 9 may be integral with power source apparatus 3, or may be provided separately from power source apparatus 3.

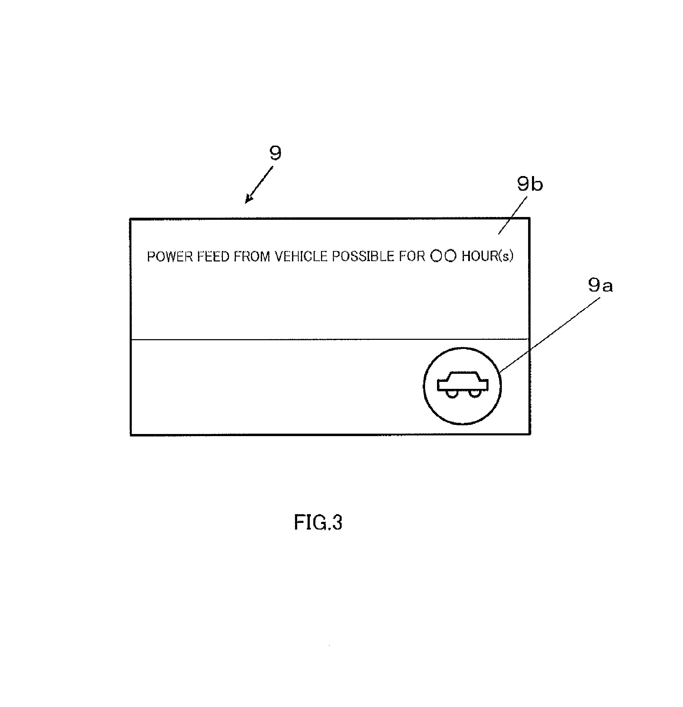

FIG.3 is an explanatory drawing of an example of display by display apparatus 9 in power cut backup system 1 according to an embodiment of the present invention. As shown in FIG.3, display apparatus 9 displays, for example, "Power feed from vehicle possible for oo hour(s)" on display panel 9b when vehicle information button 9a is pressed. Display apparatus 9 displays an intuitively understandable message - that is, a message in which remaining charge information is converted to a time period for which power can be used - in the event of a power cut, based on reported remaining charge information of accumulator 10. Provision may also be made for a message update interval to be updated automatically at predetermined intervals - for example, one-minute intervals.

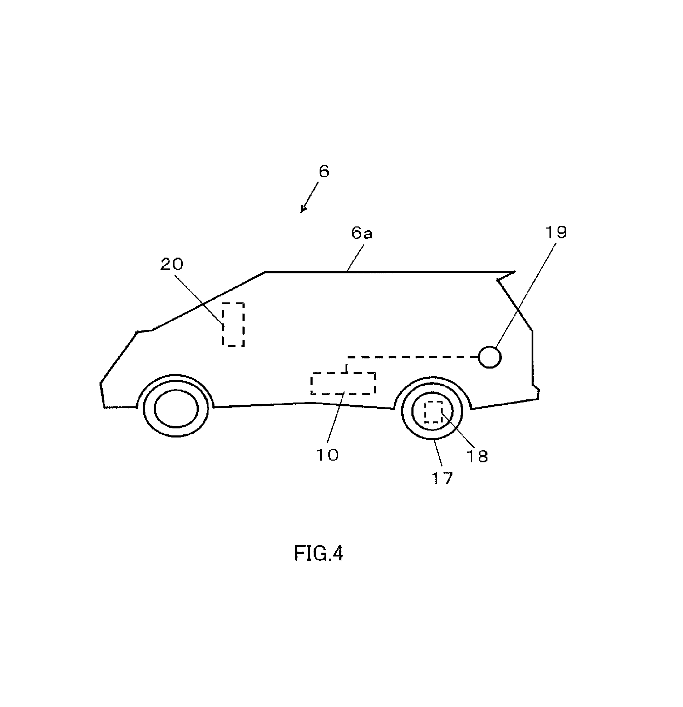

Next, the configuration of vehicle 6 of power cut backup system 1 will be described. FIG.4 is a schematic configuration diagram showing the configuration of vehicle 6 of power cut backup system 1 according to an embodiment of the present invention.

As shown in FIG.4, vehicle 6 is provided with accumulator 10 that stores power supplied to feed socket 19, and electric motor 18 functioning as a wheel driving section that rotates wheel 17 by means of power stored in accumulator 10. Vehicle 6 also supplies power stored in accumulator 10 to in-vehicle devices.

Vehicle 6 in power cut backup system 1 controls accumulator 10 power input/output based on control information of power source apparatus 3 (FIG. 1). By this means, vehicle 6 can supply (feed) power in the event of a power cut in residence 2 even during charging of accumulator 10.

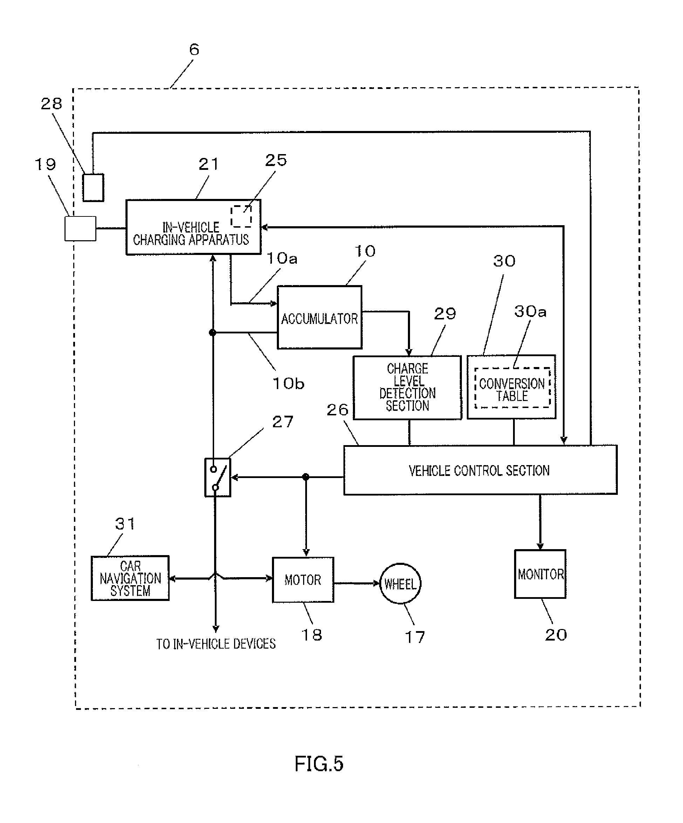

Next, the detailed configuration of vehicle 6 will be described. FIG. 5 is a block diagram showing the configuration of vehicle 6 of power cut backup system 1 according to an embodiment of the present invention.

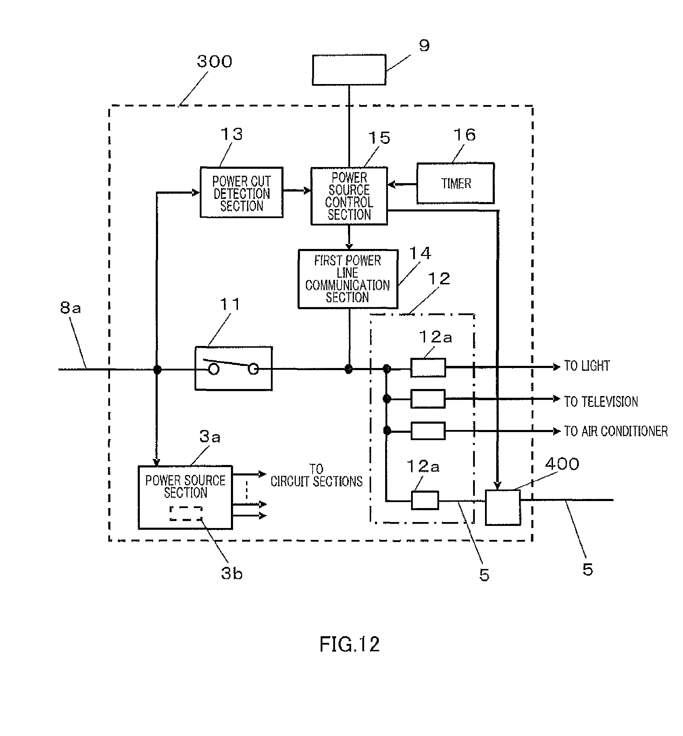

As shown in FIG.5, when control information transmitted from power source apparatus 3 is charging permission, vehicle 6 charges accumulator 10 via in-vehicle charging apparatus 21 with power supplied to feed socket 19 from power source apparatus 3. When charging is performed, in-vehicle charging apparatus 21 converts alternating current (for example, 100-volt to 200-volt voltage) power supplied to feed socket 19 to a direct current (for example, approximately 300 volts as a voltage used for electric motor 18 in FIG. 5 or 12 volts to 14 volts as a voltage used for in-vehicle devices), and supplies (feeds) the converted power to accumulator 10. Accumulator 10 internally steps up approximately 300-volt charged power to a voltage of 500 volts to 700 volts, for example, and outputs this to electric motor 18.

On the other hand, when control information transmitted from power source apparatus 3 is a feed request, vehicle 6 supplies power stored in accumulator 10 to feed socket 19 via in-vehicle charging apparatus 21. Since the power line 5 power plug is connected to feed socket 19, power is supplied to the power source apparatus 3 side. As direct current power is output from accumulator 10 of vehicle 6, when feeding is performed, in-vehicle charging apparatus 21 converts a direct current (at a voltage of 12 volts to 14 volts or 300 volts, for example) to alternating current (for example, 100-volt to 200-volt voltage) power, and feeds this to feed socket 19.

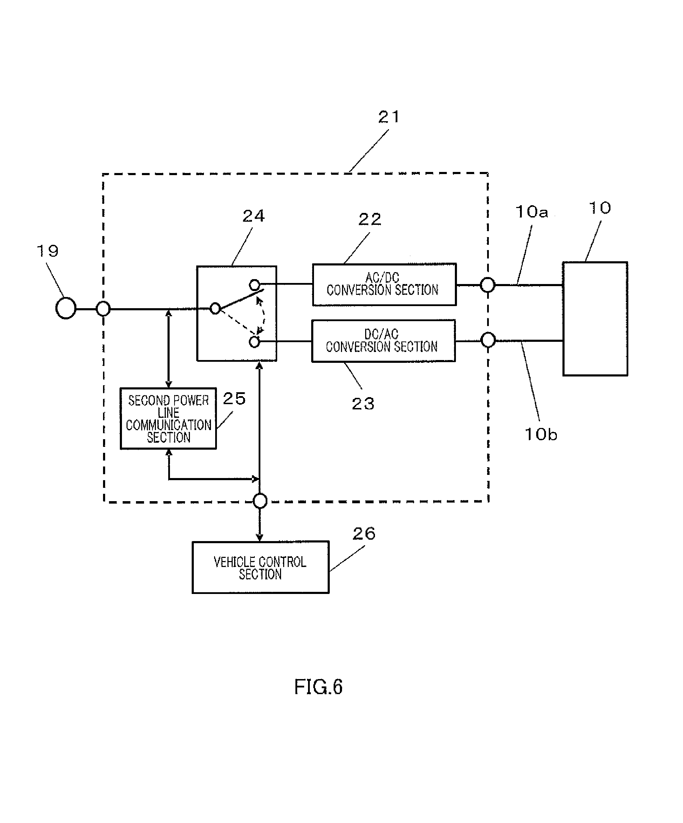

Next, in-vehicle charging apparatus 21 will be described in detail. FIG. 6 is a block diagram showing the configuration of in-vehicle charging apparatus 21 of vehicle 6 in power cut backup system 1 according to an embodiment of the present invention.

As shown in FIG. 6, in-vehicle charging apparatus 21 is provided with AC/DC conversion section 22 that converts power from an alternating current to a direct current, DC/AC conversion section 23 that converts power from a direct current to an alternating current, switching section 24 that connects either AC/DC conversion section 22 or DC/AC conversion section 23 to feed socket 19, and second power line communication section 25 that performs communication using power line 5.

Switching section 24 is controlled by vehicle control section 26. When the power plug of power line 5 is connected to feed socket 19, vehicle control section 26 receives control information from power source apparatus 3 via second power line communication section 25, and controls switching section 24 based on the received control information.

When received control information is charging permission, vehicle control section 26 connects feed socket 19 and AC/DC conversion section 22 by means of switching section 24. By this means, power supplied from feed socket 19 charges accumulator 10 via AC/DC conversion section 22.

On the other hand, when received control information is a feed request, vehicle control section 26 connects feed socket 19 and DC/AC conversion section 23 by means of switching section 24. By this means, accumulator 10 power is supplied to feed socket 19 via DC/AC conversion section 23.

Returning to FIG. 5, when charging is performed by vehicle 6, the power supply to electric motor 18 and in-vehicle devices such as car navigation system 31 is stopped. When placing vehicle 6 in a stopped state, vehicle control section 26 places switch 27 provided in power line 10b in an open state - that is, a non-connecting state — and stops the supply of power from accumulator 10 to electric motor 18 and various in-vehicle devices. On the other hand, when placing vehicle 6 in a started state, vehicle control section 26 places switch 27 in a closed state — that is, a connecting state - and supplies power from accumulator 10 to electric motor 18 and in-vehicle devices such as car navigation system 31. Power line 10a is a feed line from in-vehicle charging apparatus 21 to accumulator 10.

Now that the overall configuration of vehicle 6 of power cut backup system 1 is understood, the distinctive configuration will be described.

As shown in FIG. and FIG.5, in vehicle 6 all in-vehicle devices and electric motor 18 operate using power stored in accumulator 10. Also, accumulator 10 is charged with regenerative power generated when braking. Consequently, power consumption of accumulator 10 fluctuates greatly according to not only the distance traveled but also the operating state, making it difficult to predict the remaining power of accumulator 10 from the distance traveled alone. Consequently, if the remaining power of accumulator 10 is insufficient when power is supplied to residence 2 from vehicle 6 in the event of a power cut, power cannot continue to be supplied to residence 2, and neither can vehicle 6 be used, so that reliability as a backup system in the event of a power cut is low.

Thus, in this embodiment, remaining charge information for accumulator 10 of vehicle 6 is reported to power source apparatus 3, and a resident can accurately ascertain the remaining charge of accumulator 10.

Specifically, when the fact that the power plug of power line 5 has been connected to feed socket 19 is detected by connection detection section 28, vehicle 6 receives control information transmitted from power source apparatus 3 via second power line communication section 25. Then, if the received control information is a feed request, vehicle 6 supplies accumulator 10 power to power source apparatus 3 of residence 2, detects the charge level of accumulator 10 by means of charge level detection section 29, and transmits remaining charge information of accumulator 10 to power source apparatus 3 via second power line communication section 25 based on the detected charge level. On the power source apparatus 3 side, received remaining charge information is reported to display apparatus 9, and the remaining charge of accumulator 10 is displayed by display apparatus 9.

A resident can ascertain for how long vehicle 6 power can be used by viewing the remaining charge information displayed on display apparatus 9, and can take a power saving measure such as reducing the number of electrical appliances used if there is little remaining accumulator 10 power. Also, displaying vehicle 6 remaining power information has an effect of prompting charging of vehicle 6, and also has an effect of heightening disaster or suchlike crisis management awareness. By this means, a resident can accurately ascertain the charge level of accumulator 10, and can improve reliability as a backup in the event of a power cut.

Charge level detection section 29 detects the charge level by detecting the output voltage of accumulator 10, for example.

Also, monitor 20 displays remaining charge information — that is, the remaining time period for which accumulator 10 can be used in the event of a power cut — obtained from conversion table 30a for which setting registration has been performed beforehand in memory 30. Performing such display enables the remaining charge to be ascertained intuitively, providing a sense of security, and increasing reliability. Provision may also be made for time information to be displayed by car navigation system 31.

Power used on average in residence 2 is defined as a used power setting quantity, and remaining time information corresponding to a charge level is recorded in conversion table 30a based on this used power setting quantity. For example, if the used power setting quantity used by residence 2 is 2 kWh and a detected charge level value is equivalent to 50 kWh (the detected value being a voltage value, for example), a remaining time period for which use is possible of 25 hours is recorded in conversion table 30a as remaining charge information, and similarly, a period of 20 hours for a remaining charge of 40 kWh and 10 hours for a remaining charge of 20 kWh. Provision may also be made for remaining charge information for a plurality of used power setting quantities to be stored in conversion table 30a. For example, remaining time periods corresponding to charge levels for 1 kWh, 2 kWh, 3 kWh, and 4 kWh of used power setting quantities may be recorded. By this means, one of a plurality of used power setting quantities can be selected according to the amount of electricity used by each residence 2, and setting registration thereof can be performed beforehand in vehicle 6 according to the power usage of residence 2. Increasing the accuracy of a charge level time period by this means enables reliability to be improved. Provision may also be made for interpolation of numeric values (for example, hour-unit numeric values) obtained from conversion table 30a to be performed by vehicle control section 26, and for minute-unit time information to be calculated.

Next, the operation of power source apparatus 3 and vehicle 6 of power cut backup system 1 will be described.

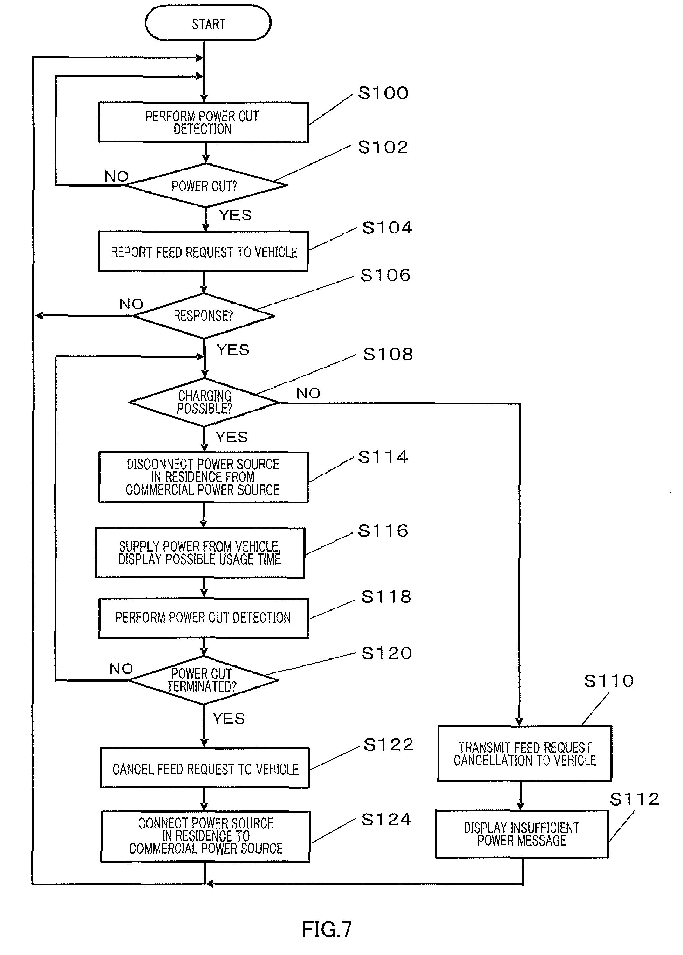

First, operation on the power source apparatus 3 side of power cut backup system 1 will be described. FIG.7 is a flowchart explaining the operation of power source apparatus 3 of power cut backup system 1 according to an embodiment of the present invention.

As shown in FIG. 1, FIG. 2, and FIG.7, power source apparatus 3 detects a power cable 8a voltage by means of power cut detection section 13, and detects a power cut (S100).

On detecting that there is a power cut (S102), power source control section 15 of power source apparatus 3 transmits feed request control information to vehicle 6 via power line 5, using first power line communication section 14 (S104). If there is no response from vehicle 6 (S106), it is determined that there is no connection to vehicle 6, and the processing flow returns to (S100). That is to say, in residence 2, a power supply from vehicle 6 is not received, and a power cut state is established.

On the other hand, if a response is obtained from vehicle 6 (S106), but power feeding from vehicle 6 is not possible due to insufficient power (S108), power source control section 15 transmits control information that cancels the feed request to vehicle 6 — that is, control information of normal charging permission (S110). Then power source control section 15 of power source apparatus 3 reports vehicle 6 power insufficiency to display apparatus 9, and display apparatus 9 displays a message such as "Vehicle cannot be used due to insufficient power," for example (S112), and returns to (S100).

On the other hand, if there is a response from vehicle 6 (S 1 06), and the response is that power feeding from vehicle 6 is possible (S108), power source control section 15 disconnects power cable 8a from distribution panel 12 by means of connection section 11 (S114). By this means, even if the power cut is terminated and commercial power source power is supplied, a collision between vehicle 6 power and commercial power source power is avoided.

Next, power source control section 15 of power source apparatus 3 receives a supply of power from vehicle 6, and supplies power to light 2a, television 2b, and air conditioner 2c in the residence. Furthermore, power source control section 15 of power source apparatus 3 receives remaining charge information of accumulator 10 from vehicle 6 using first power line communication section 14, and reports this information to and has it displayed by display apparatus 9 (S116). Supplying power from vehicle 6 to power source apparatus 3 is performed repeatedly until the commercial power source power cut is terminated (S118, S120).

When power cut of the commercial power source is terminated (S120), power source control section 15 of power source apparatus 3 transmits control information that cancels the feed request to vehicle 6 using first power line communication section 14 (S122), and after receiving a response to the feed request cancellation, places power cable 8a and distribution panel 12 in a connected state again by means of connection section 11 (S124). Then power source apparatus 3 returns to (S100) again, and performs power cut detection. While there is no power cut, power source apparatus 3 supplies power to vehicle 6.

As described above, in power cut backup system 1, when residence 2 experiences a power cut, power source apparatus 3 supplies power to electrical appliances using power from accumulator 10 of vehicle 6. Also, power source apparatus 3 receives remaining charge information of accumulator 10 from vehicle 6, and displays this information on display apparatus 9.

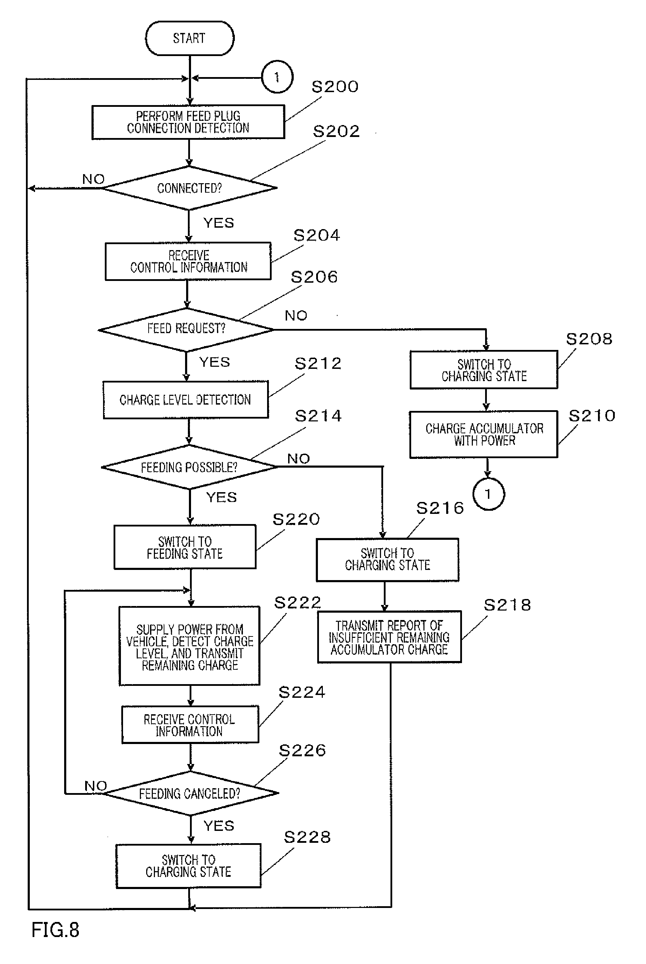

Next, operation on the vehicle 6 side of power cut backup system 1 will be described. FIG.8 is a flowchart explaining the operation of vehicle 6 of power cut backup system 1 according to an embodiment of the present invention.

As shown in FIG. 1, FIG. 4, FIG. 5, FIG.6, and FIG.8, vehicle 6 detects connection of the power plug of power line 5 to feed socket 19 by means of connection detection section 28 (S200).

When the power plug is connected to feed socket 19 (S202), vehicle control section 26 of vehicle 6 receives control information transmitted from power source apparatus 3 via second power line communication section 25, and sends back a reception complete response (S204).

If received control information is charging permission (S206), vehicle control section 26 of vehicle 6 connects feed socket 19 and AC/DC conversion section 22 by means of switching section 24 (S208), and charges accumulator 10 via AC/DC conversion section 22 with power supplied from feed socket 19 (S210).

On the other hand, if the control information is a feed request (S206), vehicle control section 26 of vehicle 6 detects the charge level of accumulator 10 by means of charge level detection section 29 (S212). If the charge level in vehicle 6 is insufficient (S214), feed socket 19 and AC/DC conversion section 22 are connected by means of switching section 24, and a charging state is established (S216). Then vehicle 6 reports remaining charge insufficiency of accumulator 10 to power source apparatus 3 (S218).

On the other hand, if the charge level is greater than or equal to a predetermined value (for example, a standard remaining charge value allowing vehicle 6 to run for approximately 20 km) and charging is possible (S214), vehicle control section 26 of vehicle 6 connects feed socket 19 and DC/AC conversion section 23 by means of switching section 24, and supplies accumulator 10 power to feed socket 19 via DC/AC conversion section 23 (S220). Also, vehicle 6 detects the charge level of accumulator 10, and reports remaining charge information of accumulator 10 to power source apparatus 3 (S222). Thus, vehicle 6 supplies power to power source apparatus 3 via power line 5 of the power plug connected to feed socket 19 in the event of a power cut. Vehicle 6 receives control information transmitted from power source apparatus 3 (S224), and repeatedly executes (S222) through (S226) until the feed request is canceled.

Next, when the feed request is canceled (S226), vehicle control section 26 of vehicle 6 connects feed socket 19 and AC/DC conversion section 22 by means of switching section 24, and establishes a charging state (S228). Then vehicle control section 26 returns to (S200), and repeats (S200) through (S228).

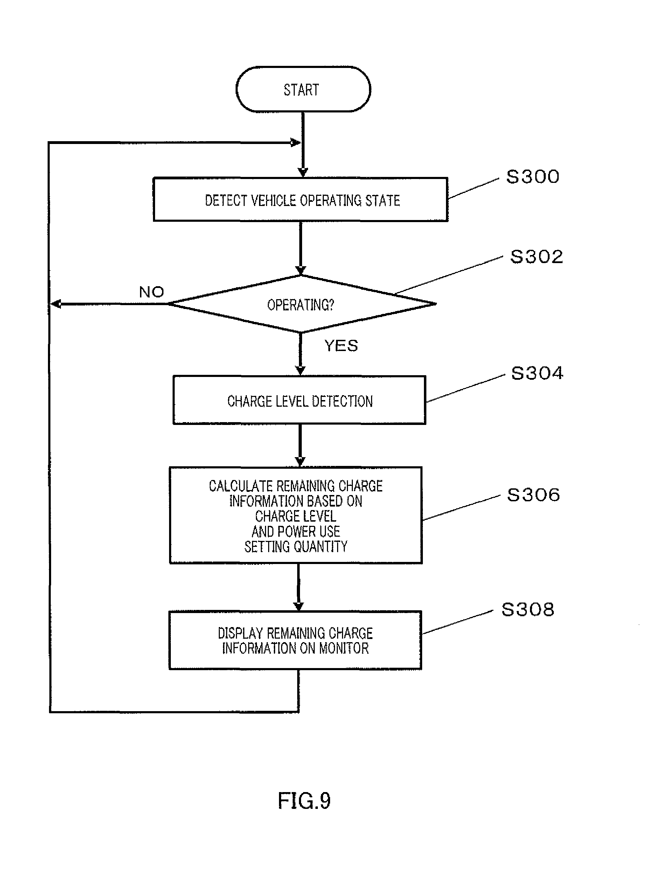

Next, a display operation whereby a charge level is displayed on monitor 20 while vehicle 6 is running will be described. FIG.9 is a flowchart explaining a charge level display operation of vehicle 6 in power cut backup system I according to an embodiment of the present invention.

As shown in FIG. 4, FIG. 5, and FIG.9, vehicle 6 detects that it has been started from the rotational position of the vehicle key after insertion (S300). When started (S302), vehicle 6 detects the charge level by means of charge level detection section 29 (S304).

Vehicle 6 refers to conversion table 30a of memory 30 according to the detected charge level, and acquires a remaining time period for which use by residence 2 is possible in the event of a power cut as remaining charge information (S306). Then remaining charge information is displayed on monitor 20 provided in front of the driver's seat (S308). By this means the driver can check remaining charge information of accumulator 10 on monitor 20 while driving. Here, it is assumed that the driver has performed setting registration of a used power setting quantity used by residence 2 in vehicle 6 beforehand.

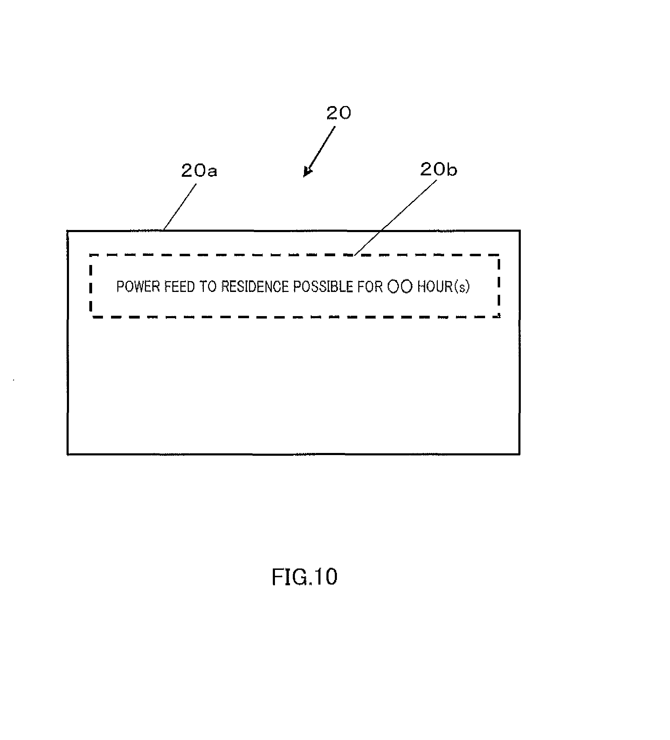

FIG.10 is an explanatory drawing showing an example of vehicle 6 charge level display in power cut backup system 1 according to an embodiment of the present invention. As shown in FIG.10, "Power feed to residence possible for oo hour(s)," for example, is displayed in display area 20b of display panel 20a of monitor 20.

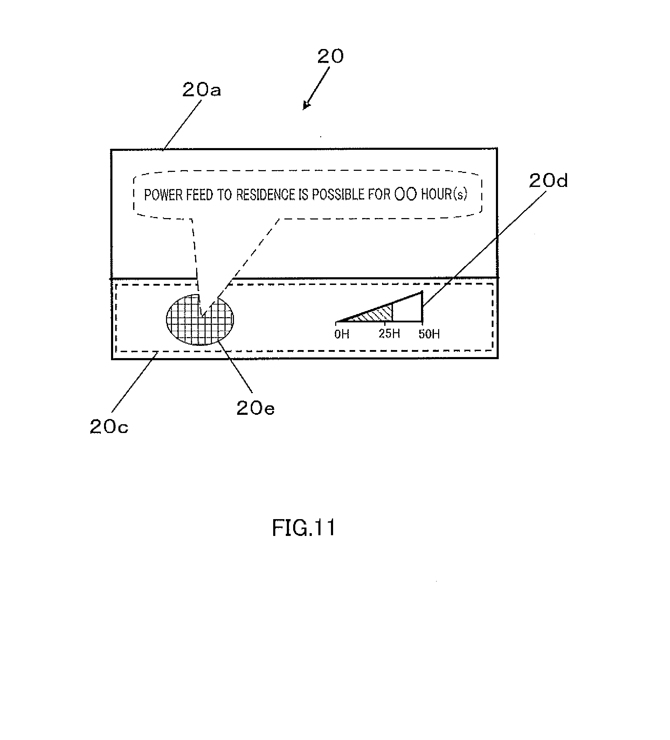

FIG. 11 is an explanatory drawing showing another example of charge level display of vehicle 6 in power cut backup system 1 according to an embodiment of the present invention. As shown in FIG.11, provision may also be made for monitor 20 to be provided with special area 20c, and for the remaining charge to be indicated in hours by charge level meter 20d. The display method is not limited to a display message. For example, special area 20c may be provided with speaker 20e, and a voice message such as "Power feed to residence is possible for oo hour(s)" may be given. Giving a voice message eliminates the need for the driver to take his or her eyes off the road ahead, enabling safety to be increased. Whichever method is used, an accurate remaining usage time period of accumulator 10 in the event of a power cut can be reported, providing a sense of security and enabling reliability to be increased.

As described above, according to an embodiment of the present invention, as shown in FIG. 1, FIG.2, FIG.4, FIG. 5, and FIG.6, power cut backup system 1 of this embodiment has a configuration provided with power source apparatus 3 inside residence 2 and vehicle 6 connected to this power source apparatus 3 in a connectable/disconnectable fashion via power line 5; power source apparatus 3 has first power line communication section 14 that communicates using power line 5, and power source control section 15 that transmits control information for controlling vehicle 6 via first power line communication section 14 based on a power cut detection result of power cut detection section 13; and vehicle 6 has accumulator 10 that stores power supplied to feed socket 19 of vehicle body 6a via power line 5, electric motor 18 that rotates wheel 17 by means of power stored in accumulator 10, charge level detection section 29 that detects the remaining charge of accumulator 10, second power line communication section 25 that communicates using power line 5, and vehicle control section 26 that controls power input/output of accumulator 10 based on control information received by second power line communication section 25 and transmits remaining charge information of accumulator 10 detected by charge level detection section 29 via second power line communication section 25; so that, in the event of a residence 2 power cut, power source apparatus 3 can transmit control information to vehicle 6, and a supply of power can be received, and vehicle 6 remaining charge information of accumulator 10 can be received, from vehicle 6 via power line 5. By this means, a resident can ascertain for how long vehicle 6 power can be used by displaying received vehicle 6 remaining charge information of accumulator 10 on display apparatus 9, and can take a power saving measure such as reducing the number of electrical appliances used if there is little remaining accumulator 10 power.

Also, as shown in FIG. 4 and FIG. 5, vehicle 6 of this embodiment is provided with accumulator 10 that stores power supplied to feed socket 19 of vehicle body 6a, and electric motor 18 that rotates wheel 17 by means of power stored in accumulator 10, and is provided with charge level detection section 29 that detects the remaining charge of accumulator 10, second power line communication section 25 that communicates using power line 5, and monitor 20 that displays remaining charge information in which the remaining charge of accumulator 10 detected by charge level detection section 29 has been converted to a time period for which use is possible in the event of a power cut, so that the driver of vehicle 6 can accurately ascertain the remaining charge of accumulator 10 that can be used in the event of a power cut via monitor 20, and the remaining charge in the event of a power cut can be checked intuitively by being displayed as a time period, providing an effect of prompting charging of accumulator 10. By this means, a sense of security can be increased when using vehicle 6 as a backup power source in the event of a power cut, and reliability can be improved.

An actual configuration of the present invention is not limited to the above-described embodiment, and various variations and modifications may be possible without departing from the scope of the present invention.

FIG.12 is a block diagram showing the configuration of power source apparatus 300 that can be used instead of above-described power source apparatus 3 in power cut backup system 1. In FIG. 12, parts common to power source apparatus 3 shown in FIG.2 are assigned the same reference codes as in FIG.2.

As shown in FIG.12, power source apparatus 300 connects power cable 8a and distribution panel 12 via connection section 11. Distribution panel 12 distributes power, and supplies the respective distributed power to electrical appliances in residence 2 via breakers 12a. Breakers 12a are apparatuses that automatically break a circuit if an abnormal current flows through them.

Connection section 11 connects or disconnects power cable 8a through which commercial power source power is supplied and distribution panel 12. When connection section 11 is open, the residence power source is disconnected from power cable 8a.

Power source apparatus 300 is provided with power source section 3a, and has small-capacity accumulator 3b in power source section 3a that can be charged with power. Accumulator 3b is charged when there is no power cut, and supplies power to circuit sections in the event of a power cut. By this means, power source apparatus 300 can operate even in the event of a power cut.

Now that the overall configuration of power source apparatus 300 is understood, the distinctive configuration of power source apparatus 300 will be described.

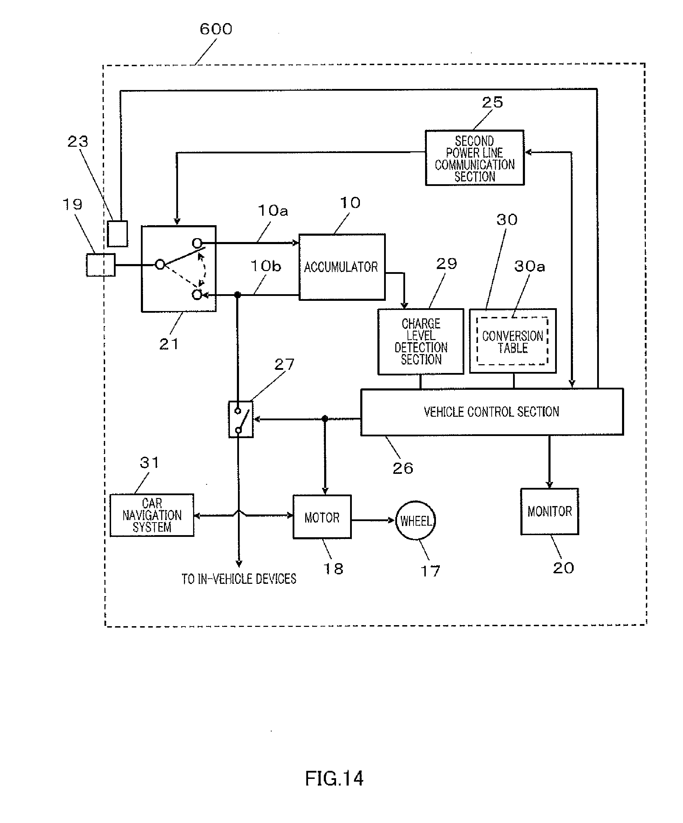

As shown in FIG.12, provision is made for power source apparatus 300 to back up power from vehicle 600 (FIG. 14) automatically in the event of a power cut. That is to say, power source apparatus 300 is provided with power cut detection section 13 that detects an interruption of power used in residence 2, first power line communication section 14 that communicates with vehicle 600 using power line 5, and power source control section 15 that transmits control information for controlling vehicle 600 via first power line communication section 14 based on a power cut detection result of power cut detection section 13, and transmits control information to vehicle 600 in the event of a power cut. Vehicle 600 controls input/output of accumulator 10 based on received control information. The configuration of vehicle 600 will be described later herein.

If a power cut is detected by power cut detection section 13, power source control section 15 places connection section 11 in a non-connecting state and disconnects distribution panel 12 from power cable 8a. After disconnecting distribution panel 12 from power cable 8a, power source control section 15 transmits control information to vehicle 600, and causes power to be supplied to distribution panel 12 from vehicle 600. Through the disconnection of distribution panel 12 from power cable 8a, a collision between power of commercial power source and power of vehicle 600 is avoided, and the occurrence of a fire or the like due to such a collision is prevented, even if a power cut of commercial power source is terminated while power of vehicle 600 is being supplied within power source apparatus 300. By this means, the safety of power source apparatus 300 is improved.

Power source control section 15 controls power conversion section 400 connected in power line 5, and converts power line 5 power to a direct current or alternating current - that is, from an alternating current to a direct current when charging is performed, and from a direct current to an alternating current in the event of a power cut. Details of power conversion section 400 will be given later herein.

Power source apparatus 300 is also provided with timer 16, which is a time counting section that counts time. While a power cut is being detected by power cut detection section 13, power source control section 15 counts the time by means of timer 16, and determines a case in which the counted time is greater than or equal to a predetermined time to be a power cut. For example, if the predetermined time is 0.5 second, power cut backup system 1 does not operate if power is cut only momentarily (for less than 0.5 second) due to a lightning strike. By this means, the safety and reliability of power cut backup system 1 are improved.

Display apparatus 9 displays remaining power information reported from vehicle 600 via power source apparatus 300.

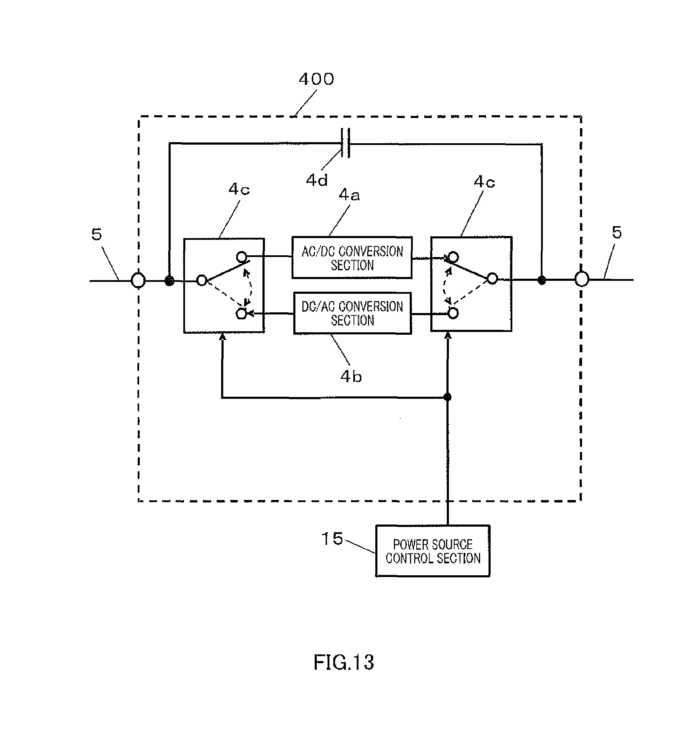

Next, the configuration of power conversion section 400 of power cut backup system 1 will be described. FIG.13 is a block diagram showing the configuration of power conversion section 400 of power source apparatus 300 in power cut backup system 1 according to an embodiment of the present invention.

As shown in FIG. 13, power conversion section 400 is connected in power line 5, and is provided with AC/DC conversion section 4a that converts power from an alternating current to a direct current, DC/AC conversion section 4b that converts power from a direct current to an alternating current, and selection section 4c that selects either AC/DC conversion section 4a or DC/AC conversion section 4b.

Power source control section 15 performs control of selection section 4c so that AC/DC conversion section 4a is selected when power is supplied to vehicle 600 in the event of a power cut (when control information is charging permission for vehicle 600), and DC/AC conversion section 4b is selected when power is fed from vehicle 600 in the event of a power cut (when control information is a feed request to vehicle 600).

By means of this configuration, when charging is performed, power conversion section 400 converts alternating current (for example, 100-volt to 200-volt voltage) power to a direct current (for example, approximately 300 volts as a voltage for electric motor use or 12 volts to 14 volts as a voltage used for in-vehicle devices), and outputs the converted power (current) to vehicle 600 via power line 5. On the other hand, in the event of a power cut, power conversion section 400 converts a direct current fed from vehicle 600 (at a voltage of 12 volts to 14 volts or 300 volts, for example) to alternating current (for example, 100-volt to 200-volt voltage) power, and supplies this to electrical appliances in the residence via distribution panel 12.

Capacitor 4d is a bypass element for passing a high-frequency wave in power line communication. By this means, a power line communication high-frequency wave can be passed, and communication between power source apparatus 300 and vehicle 600 can be performed, even though power conversion section 400 is provided in power line 5.

Next, the configuration of vehicle 600 will be described in detail. FIG.14 is a block diagram showing the configuration of vehicle 600 that can be used instead of above-described vehicle 6 in power cut backup system 1. In FIG.14, parts common to FIG. 5 are assigned the same reference codes as in FIG. 5.

As shown in FIG.14, when the power plug of power line 5 is connected to feed socket 19, vehicle control section 26 of vehicle 600 receives control information from power source apparatus 300 via second power line communication section 25, and controls switching section 24 based on the received control information.

That is to say, when control information transmitted from power source apparatus 300 is charging permission, vehicle control section 26 connects feed socket 19 and the input terminal of accumulator 10 by means of switching section 24, and charges accumulator 10 with power supplied to feed socket 19. Accumulator 10 internally steps up approximately 300-volt charged power to a voltage of 500 volts to 700 volts, for example, and outputs this to electric motor 18.

On the other hand, when control information transmitted from power source apparatus 300 is a feed request, vehicle control section 26 connects feed socket 19 and the output terminal of accumulator 10 by means of switching section 24, and supplies accumulator 10 power to feed socket 19. Since the power plug of power line 5 is connected to feed socket 19, power is supplied to the power source apparatus 300 side.

When charging is performed by vehicle 600, the power supply to electric motor 18 and in-vehicle devices such as car navigation system 31 is stopped. When placing vehicle 600 in a stopped state, vehicle control section 26 places switch 27 provided in power line 10b in an open state — that is, a non-connecting state - and stops the supply of power from accumulator 10 to electric motor 18 or various in-vehicle devices. On the other hand, when placing vehicle 600 in a started state, vehicle control section 26 places switch 27 in a closed state - that is, a connecting state — and supplies power from accumulator 10 to electric motor 18 or in-vehicle devices such as car navigation system 31. Power line 10a is a feed line from switching section 24 to accumulator 10.

Now that the overall configuration of vehicle 600 of power cut backup system 1 is understood, the distinctive configuration will be described.

As shown in FIG.14, in vehicle 600, all in-vehicle devices and electric motor 18 operate using power stored in accumulator 10. Also, accumulator 10 is charged with regenerative power generated when braking. Consequently, accumulator 10 power consumption fluctuates greatly according to not only the distance traveled but also the operating state, making it difficult to predict the remaining power of accumulator 10 from the distance traveled alone. Consequently, if the remaining power of accumulator 10 is insufficient when power is supplied to residence 2 from vehicle 600 in the event of a power cut, power cannot continue to be supplied to residence 2, and neither can vehicle 600 be used, so that reliability as a backup system in the event of a power cut is low.

Thus, in this embodiment, remaining charge information for accumulator 10 of vehicle 600 is reported to power source apparatus 300, and a resident can accurately ascertain the remaining charge of accumulator 10.

Specifically, when the fact that the power line 5 power plug has been connected to feed socket 19 is detected by connection detection section 28, vehicle 600 receives control information transmitted from power source apparatus 300 via second power line communication section 25. Then, if the received control information is a feed request, vehicle 600 supplies accumulator 10 power to power source apparatus 300 of residence 2, detects the charge level of accumulator 10 by means of charge level detection section 29, and transmits remaining charge information of accumulator 10 to power source apparatus 300 via second power line communication section 25 based on the detected charge level. On the power source apparatus 300 side, received remaining charge information is reported to display apparatus 9, and the remaining charge of accumulator 10 is displayed by display apparatus 9.

A resident can ascertain for how long vehicle 600 power can be used by viewing the remaining charge information displayed on display apparatus 9, and can take a power saving measure such as reducing the number of electrical appliances used if there is little remaining accumulator 10 power. Also, displaying vehicle 600 remaining power information has an effect of prompting charging of vehicle 600, and also has an effect of heightening disaster or suchlike crisis management awareness. By this means, a resident can accurately ascertain the charge level of accumulator 10, and can improve reliability as a backup in the event of a power cut.

Charge level detection section 29 detects the charge level by detecting the accumulator 10 output voltage, for example.

Also, monitor 20 displays remaining charge information — that is, the remaining time period for which accumulator 10 can be used in the event of a power cut — obtained from conversion table 30a for which setting registration has been performed beforehand in memory 30. Performing such display enables the remaining charge to be ascertained intuitively, providing a sense of security, and increasing reliability. Provision may also be made for time information to be displayed by car navigation system 22.

Power used on average in residence 2 is defined as a used power setting quantity, and remaining time information corresponding to a charge level is recorded in conversion table 30a based on this used power setting quantity. For example, if the used power setting quantity used by residence 2 is 2 kWh and a detected value of charge level is equivalent to 50 kWh (the detected value being a voltage value, for example), a remaining time period for which use is possible of 25 hours is recorded in conversion table 30a as remaining charge information, and similarly, a period of 20 hours for a remaining charge of 40 kWh and 10 hours for a remaining charge of 20 kWh. Provision may also be made for remaining charge information for a plurality of used power setting quantities to be stored in conversion table 30a. For example, remaining time periods corresponding to charge levels for 1 kWh, 2 kWh, 3 kWh, and 4 kWh of used power setting quantities may be recorded. By this means, one of a plurality of used power setting quantities can be selected according to the amount of electricity used by each residence 2, and setting registration thereof can be performed beforehand in vehicle 600 according to the power usage of residence 2. Increasing the accuracy of a charge level time period by this means enables reliability to be improved. Provision may also be made for interpolation of numeric values (for example, hour-unit numeric values) obtained from conversion table 30a to be performed by vehicle control section 26, and for minute-unit time information to be calculated.

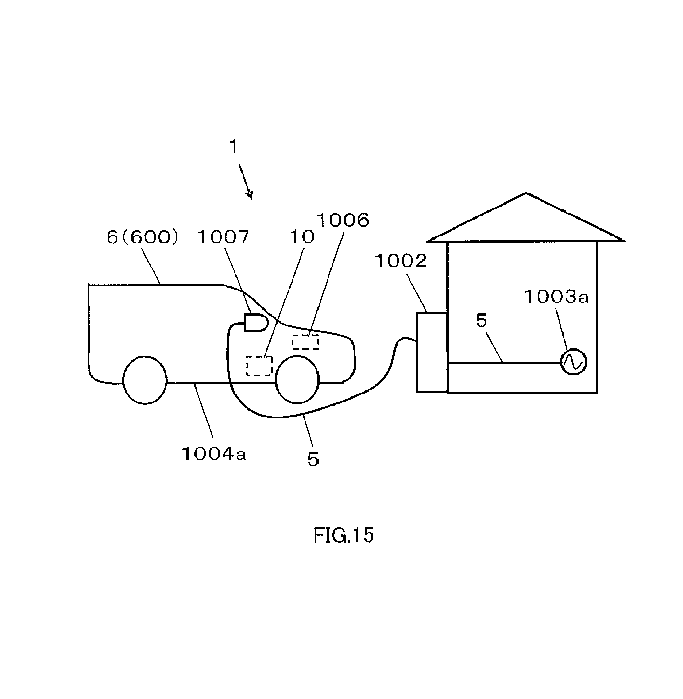

Next, a case in which feed socket 19 of vehicle 6 (600) according to the above embodiment is provided at the front of the vehicle will be described with reference to FIG. 15 through FIG.22.

FIG. 15 is a configuration diagram of power cut backup system 1. In FIG.15, power cut backup system 1 is provided with charging apparatus 1002 and vehicle 6 (600) connected to charging apparatus 1002 via power line 5.

Charging apparatus 1002 is installed outside a typical residence, and is connected to power source 1003a inside the residence. By this means, power is supplied from power source 1003a inside the residence to charging apparatus 1002, and charging apparatus 1002 supplies the supplied power to vehicle 6 (600). By this means, in power cut backup system 1, power is supplied to vehicle 6 (600) from charging apparatus 1002 via power line 5, and accumulator 10 of vehicle 6 (600) is charged with the power.

FIG. 15 shows an example in which power source apparatus 3 (300) shown in FIG. 1 (FIG. 12) and so forth are housed in charging apparatus 1002.

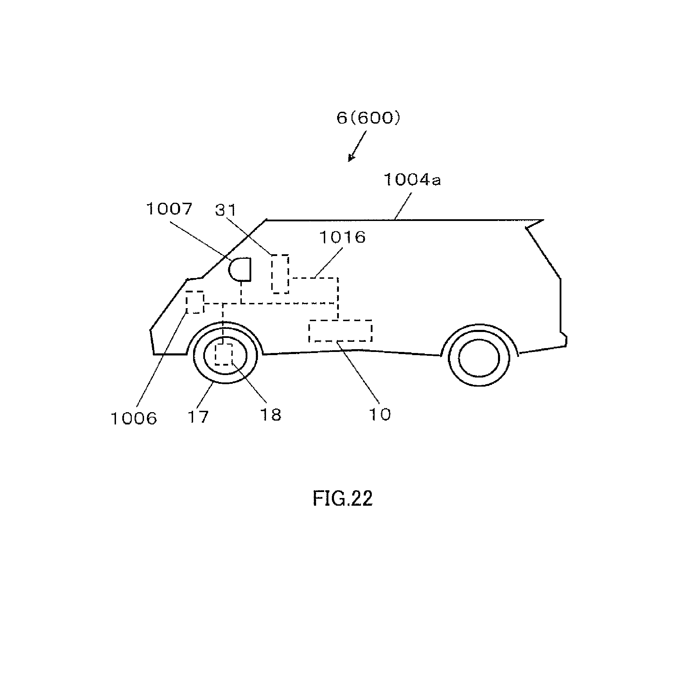

An electric vehicle such as shown in FIG.22 is used as vehicle 6 (600), in which accumulator 10 and electric motor 18 functioning as a wheel driving section that rotates wheel 17 are provided in vehicle body 1004a, and electric motor 18 is driven using charge power of accumulator 10. The electric vehicle charges accumulator 10 with power supplied via power line 5.

Accumulator 10 supplies power to engine control section 1006, electric motor 18, car navigation system 31, and so forth, via power line 1016. Power line 1016 is also used as a communication line, and accumulator 10, engine control section 1006, electric motor 18, and car navigation system 31 performs power line communication via power line 1016.

Information sent by power line communication includes, for example, accumulator information such as the remaining battery charge, usage period, number of charges, and so forth, of accumulator 10, and motor information such as the usage period, winding temperature, and so forth, of electric motor 18 functioning as a wheel driving section. Using this information, for example, engine control section 1006 controls the rotation speed, acceleration, and so forth of electric motor 18 according to the remaining battery charge of accumulator 10 and the winding temperature of electric motor 18. Car navigation system 31 displays accumulator 10 remaining battery charge information obtained via power line 1016. Remaining battery charge display information has an effect of prompting the driver to charge accumulator 10.

Vehicle 6 (600) and an external information device (such as a personal computer installed in the vehicle 6 (600) dealer's maintenance shop, for example) may also be made to communicate by means of power line communication. For example, the above accumulator information and motor information are transmitted from accumulator 10 and the wheel driving section of vehicle 6 (600) to an external information device via power line 1016 as maintenance information. By this means, an external information device can easily acquire replacement time of parts for accumulator 10 and electric motor 18 of vehicle 6 (600), enabling a rapid response such as performing deterioration management and reporting replacement time of parts, or immediately replacing a worn-out part. In this way, power line 1016 and power line 5 are used as communication lines.

The main parts of vehicle 6 (600) - that is, accumulator 10, engine control section 1006, electric motor 18 functioning as an engine, car navigation system 31, and so forth — are concentrated forward with respect to the direction of travel of vehicle 6 (600), and it is necessary for power line 5 to be routed from feed socket 19 so as to be distributed to the main parts within vehicle body 1004a.

Also, if feed socket 19 is provided on only one of the two sides of vehicle body 1004a, it may be necessary for power line 5 of charging apparatus 1002 to be routed around depending on the orientation of vehicle 6 (600) when stopped, making a longer power line 5 of charging apparatus 1002 necessary. Consequently, transmission errors are prone to occur when communicating using power line 5 due to a tendency for noise to be superimposed on power line 5 and so forth.

Thus, in power cut backup system 1 of this embodiment, feed socket 19 is provided on both sides at the front of vehicle body 1004a.

By means of this configuration, feed socket 19 can be brought closer to accumulator 10 and electric motor 18, and the wiring length of power line 5 inside vehicle body 1004a can be shortened. Also, by providing feed socket 19 on both sides of vehicle body 1004a, power feeding can be performed from either side of vehicle body 1004a, and power line 5 can be connected to feed socket 19 of vehicle 6 (600) and charging apparatus 1002 without being routed around regardless of the orientation in which vehicle 6 (600) is stopped with respect to external charging apparatus 1002. In this way, the length of a power line used for communication can be shortened, and noise superimposed on the power line can be suppressed, enabling the occurrence of communication errors to be suppressed.

Specifically, as shown in FIG. 15, feed socket 19 is provided inside the body of rear-view mirror 1007 on both sides of vehicle body 1004a, forward with respect to the direction of travel.

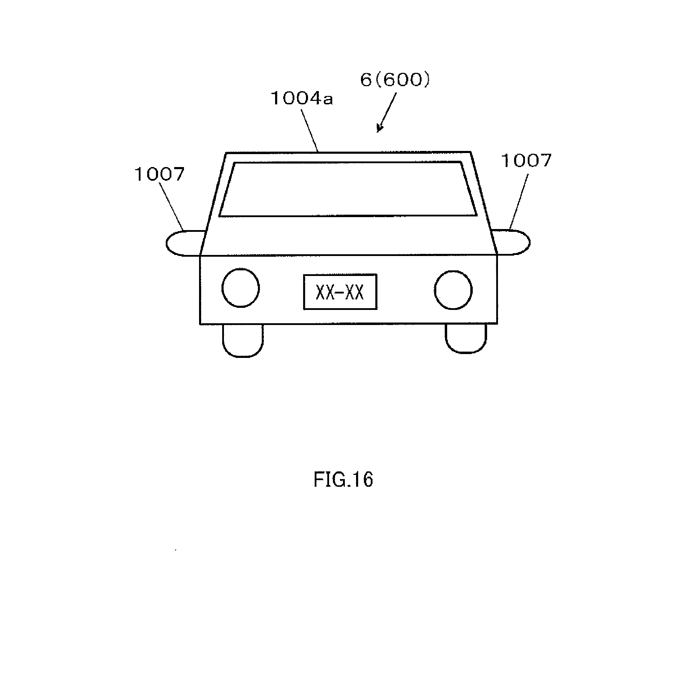

FIG.16 is a front view of vehicle 6 (600) of power cut backup system 1 according to an embodiment of the present invention. As shown in FIG.16, vehicle 6 (600) is provided with rear-view mirror 1007 on both sides of vehicle body 1004a, forward with respect to the direction of travel.

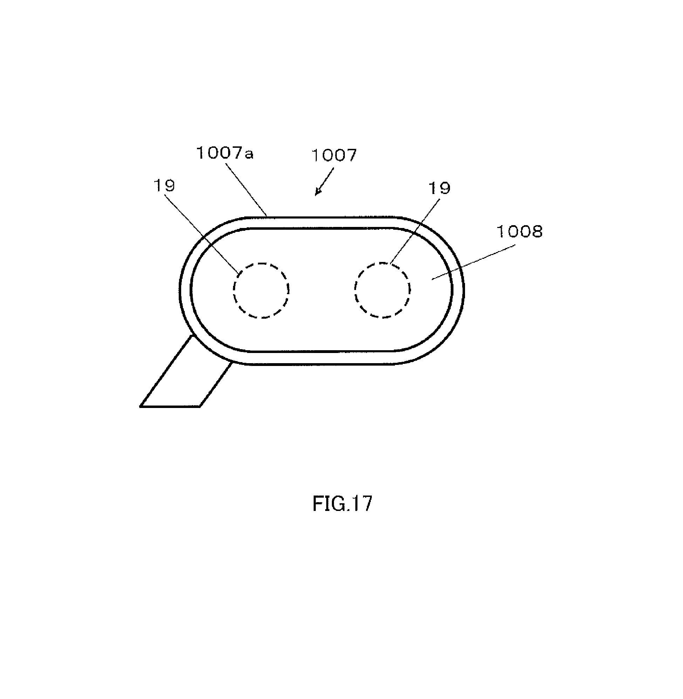

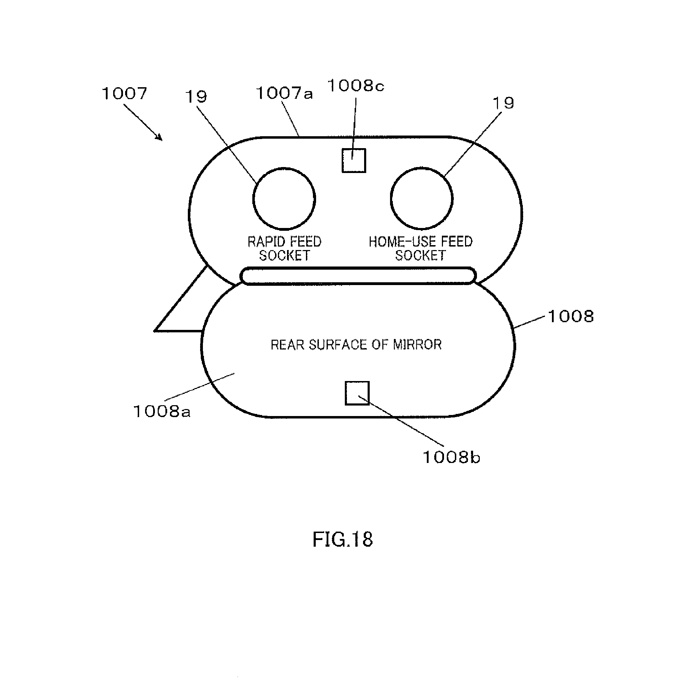

FIG. 17 is a configuration diagram of rear-view mirror 1007 of vehicle 6 (600) in power cut backup system 1 according to an embodiment of the present invention, and FIG.18 is a configuration diagram showing a state in which mirror part 1008 of rear-view mirror 1007 shown in FIG.17 has been opened.

As shown in FIG.17, rear-view mirror 1007 is provided with mirror part 1008 that can be opened and closed, and two feed sockets 19 are provided on the rear-surface side of this mirror part 1008 — that is, inside rear-view mirror body 1007a. Feed sockets 19 are exposed when mirror part 1008 is opened. That is to say, when vehicle 6 (600) is supplied (charged) with power, mirror part 1008 is opened as shown in FIG.18, and at other non-charging times mirror part 1008 is closed as shown in FIG.17. By this means, mirror part 1008 not only allows the rear of vehicle 6 (600) to be checked, but also prevents exposure when feed sockets 19 are not used, and protects feed sockets 19 from rain and the like.

Feed sockets 19 are disposed inclined downward toward the rear (toward the interior) from the surface of mirror part 1008, and have a structure that deters the infiltration of rain or the like into feed sockets 19 during charging. By this means, power shorting due to an electrical leakage or similar accident can be obviated, improving safety.

Next, opening and closing of mirror part 1008 will be described. As shown in FIG. 18, mirror part 1008 of rear-view mirror 1007 is attached to rear-view mirror body 1007a so as to be able to be opened and closed. Fasteners 1008b and 1008c that secure mirror part 1008 are provided on rear-view mirror body 1007a and mirror rear surface 1008a respectively, and locking of these fasteners 1008b and 1008c can be released, and mirror part 1008 can be opened by being rotated from the upper side. When mirror part 1008 is opened, the two feed sockets 19 are exposed. The power plug of power line 5 from charging apparatus 1002 is inserted into (connected to) one of the two feed sockets 19, and power is supplied.

The supply current when charging differs for the two feed sockets 19, with feed socket 19 with the larger supply current hallowing faster charging. Thus, one or other of the two feed sockets 19 is selected according to the supply current capacity of charging apparatus 1002. That is to say, in the case of charging apparatus 1002 installed at a power feeding station or the like, the commercial feeding time is short - that is, an apparatus with a large supply current for charging can be used — and therefore feed socket 19 with the larger supply current (designated "rapid feed socket" in FIG.18) is selected. On the other hand, in the case of charging apparatus 1002 connected to general home power source 1003a, a large supply current cannot be used when charging, and therefore feed socket 19 with the lower supply current (designated "home-use feed socket" in FIG.18) is selected.

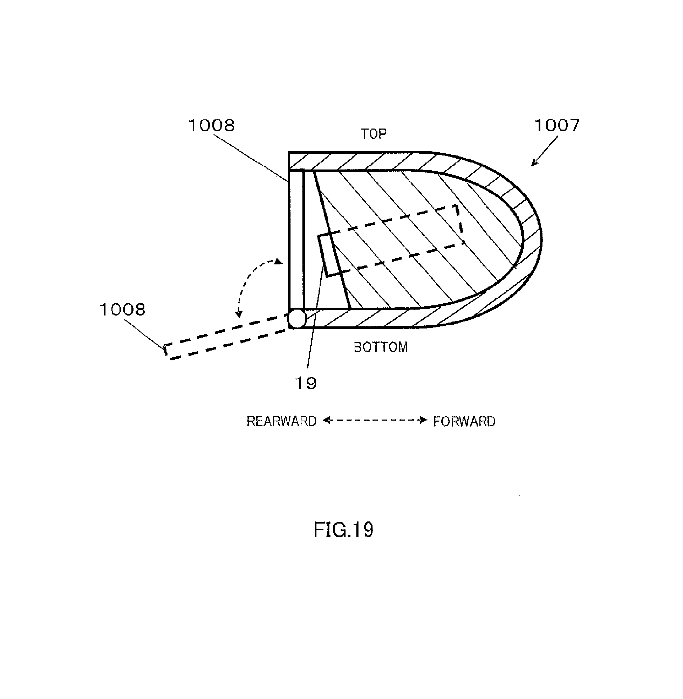

FIG.19 is a cross-sectional view of rear-view mirror 1007 of vehicle 6 (600) in power cut backup system 1 according to an embodiment of the present invention. As shown in FIG.19, feed socket 19 is provided at a position rearward of the surface of mirror part 1008, and the rear side of feed socket 19 is higher than the entrance side — that is, inclined downward from the horizontal. By this means, rain or the like can be prevented from entering feed socket 19 directly.

As described above, according to this embodiment, as shown in FIG. 15 and FIG.17, vehicle 6 (600) is provided with accumulator 10 that stores power supplied to feed socket 19 of vehicle body 1004a, and a wheel driving section that rotates a wheel by means of power stored in accumulator 10; and by providing feed socket 19 on both sides of vehicle body 1004a, forward with respect to the direction of travel, feed socket 19 can be brought closer to accumulator 10 and the wheel diving section, and the wiring length of power line 5 inside vehicle body 1004a can be shortened. Also, by providing feed socket 19 on both sides of vehicle body 1004a, power feeding can be performed from either side of vehicle body 1004a, and power line 5 can be connected to feed socket 19 of vehicle 6 (600) and charging apparatus 1002 without being routed around regardless of the orientation in which vehicle 6 (600) is stopped with respect to external charging apparatus 1002. In this way, the length of a power line used for communication can be shortened, and noise superimposed on the power line can be suppressed, enabling the occurrence of communication errors to be suppressed.

By this means, the occurrence of communication errors can be suppressed even when communication is performed using power line 5 inside vehicle body 1004a.

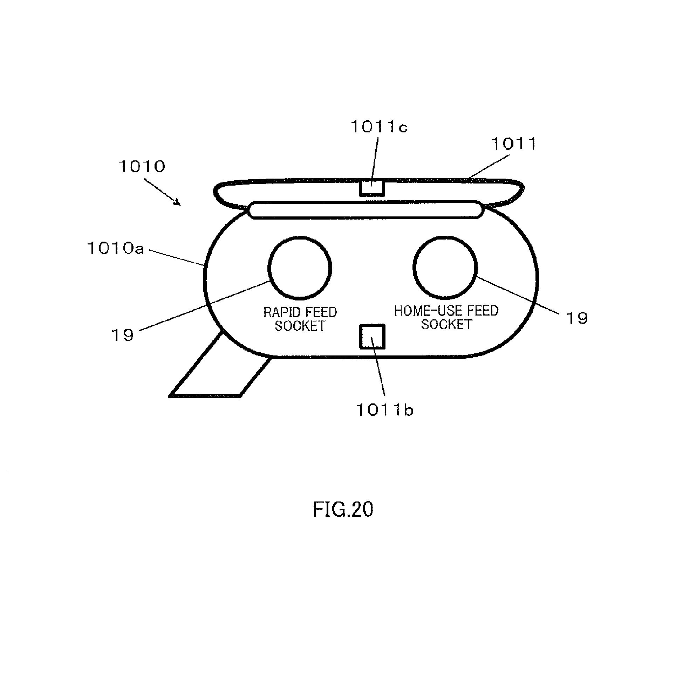

Mirror part 1008 of rear-view mirror 1007 has been assumed to be able to be opened and closed from the upper side, but the present invention is not limited to this. FIG.20 is a configuration diagram showing another example of rear-view mirror 1007 of vehicle 6 (600) in power cut backup system 1 according to an embodiment of the present invention. As shown in FIG.20, the lower side, for example, of mirror part 1011 of rear-view mirror 1010 may be made so as to be able to be opened and closed. In this case, fasteners 1011b and 1011c are provided at the bottom of rear-view mirror body 1010a and the rear surface of mirror part 1008. Mirror part 1011 may also be opened and closed automatically by means of electric power.

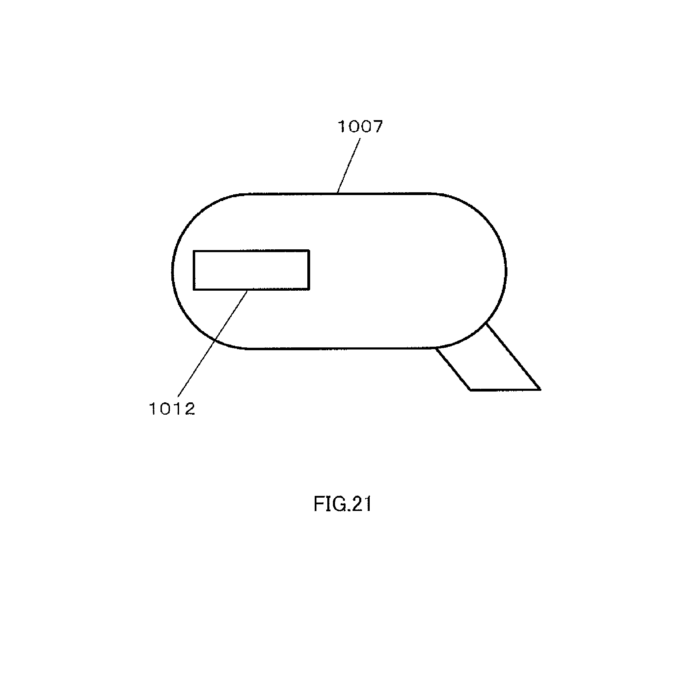

FIG. 21 is an explanatory drawing of direction indicator 1012 of rear-view mirror 1007 of vehicle 6 (600) in power cut backup system 1 according to an embodiment of the present invention. As shown in FIG. 21, direction indicator 1012 for indicating the direction of travel of vehicle 6 (600) to another vehicle is provided on rear-view mirror body 1007a, and provision may be made for the illumination state of direction indicator 1012 to be changed when charging is performed to indicate that charging is in progress or that charging has been completed. For example, a red light emitting diode and a yellow light emitting diode may be provided in direction indicator 1012, and the illumination state may be changed in terms of the emitted color, such as by switching on the red light emitting diode during charging, and switching on the yellow light emitting diode when charging has been completed. The illumination state may also be changed in terms of flashing of direction indicator 1012. For example, the flashing frequency of direction indicator 1012 may be changed, with an interval display in which direction indicator 1012 flashing is performed once during charging, and an interval display in which flashing is performed twice each time successively when charging has been completed. With either configuration, it is possible to distinguish between charging in progress and completion of charging.

An actual configuration of the present invention is not limited to the above-described embodiment, and various variations and modifications may be possible without departing from the scope of the present invention.

For example, an electric vehicle has been described as an example, but the present invention is not limited to this. For example, a hybrid vehicle employing both an electric motor and an internal combustion engine may be used.

The disclosures of Japanese Patent Application No.2009-236390, filed on October 13, 2009, Japanese Patent Application No.2009-236391, filed on October 13, 2009, and Japanese Patent Application No.2009-236392, filed on October 13, 2009, including the specifications, drawings and abstracts, are incorporated herein by reference in their entirety.

### Industrial Applicability

As described above, a power cut backup system of the present invention has a configuration provided with a power source apparatus inside a residence and a vehicle connected to this power source apparatus in a connectable/disconnectable fashion via a power line; the power source apparatus has a power cut detection section that detects an interruption of power used in the residence, a first power line communication section that communicates using the power line, and a power source control section that transmits control information for controlling the vehicle via the first power line communication section based on a power cut detection result of the power cut detection section; and the vehicle has an accumulator that stores power supplied to a feed socket of the vehicle body via the power line, a wheel driving section that rotates a wheel by means of power stored in the accumulator, a charge level detection section that detects the remaining charge of the accumulator, a second power line communication section that communicates using the power line,
and a vehicle control section that controls accumulator power input/output based on control information received by the second power line communication section and transmits charge level information detected by the charge level detection section via the second power line communication section; so that, in the event of a power cut, the power source apparatus can transmit control information to the vehicle, vehicle power input/output can be controlled, and a supply of power can be received and remaining vehicle accumulator charge information can be received, and a resident can ascertain for how long vehicle power can be used by displaying charge level information on a display apparatus or the like, and can take a power saving measure such as reducing the number of electrical appliances used if there is little charge level.

Also, a vehicle of the present invention is provided with a charge level detection section that detects the remaining charge of an accumulator, and a display section that displays remaining charge information in which the charge level detected by charge level detection section has been converted to a time period for which use is possible in the event of a power cut, so that the driver of the vehicle can ascertain the charge level in terms of time, and can intuitively ascertain the charge level available as backup for residence power in the event of a power cut.

Thus, the present invention is suitable for use in a power cut backup system that provides power backup in the event of a power cut in a residence, and a vehicle such as an electric vehicle or hybrid vehicle.

## Claims

1. A power source apparatus that can be connected to a vehicle with power supplying capability via a power line, the power source apparatus comprising:
a power cut detection section that detects a power cut;
a power line communication section that performs communication via the power line; and
a power control section that transmits control information controlling a power supply provided by the vehicle to the vehicle using the power line communication section, based on a detection result of the power cut detection section.

2. The power source apparatus according to claim 1, wherein the power line communication section further comprises a display section that receives information relating to a power supply provided by the vehicle from the vehicle, and displays information relating to a power supply provided by the vehicle.

3. The power source apparatus according to claim 1, further comprising a connection section that connects or disconnects an outdoor commercial power source and an indoor power source,
wherein the power source control section disconnects the commercial power source and the indoor power source using the connection section if a power cut is detected by the power cut detection section.

4. The power source apparatus according to claim 1, further comprising a power storage section that stores power,
wherein the power storage section is charged when there is no power cut, and supplies power to the power source apparatus in the event of a power cut.

5. The power source apparatus according to claim 1, further comprising a time counting section that counts time during which the power cut detection section detects a power cut,
wherein the power source control section determines that a power cut has occurred if a time counted by the time counting section exceeds a predetermined time.

6. The power source apparatus according to claim 2, wherein the display section displays remaining charge information for an power storage section installed in the vehicle.

7. The power source apparatus according to claim 6, wherein the display section updates and displays remaining charge information for the accumulator.

8. The power source apparatus according to claim I, further comprising a power conversion section that converts power on the power line into a direct current or an alternating current,
wherein the power source control section controls the power conversion section based on a detection result of the power cut detection section.

9. The power source apparatus according to claim 8, wherein:
the power conversion section further comprises:
a first power conversion section that converts the power from a direct current to an alternating current;
a second power conversion section that converts the power from an alternating current to a direct current; and
a selection section that selects either the first power conversion section or the second power conversion section; and
the power conversion section controls the selection section so as to select the first power conversion section if the control information is charging permission for the vehicle, and to select the second power conversion section if the control information is a feed request for the vehicle.

10. A vehicle that can be connected to a power source apparatus via a power line, the vehicle comprising:
a power storage section that stores power supplied from the power source apparatus;
a power line communication section that performs communication via the power line; and
a vehicle control section that controls power input/output of the power storage section based on control information transmitted from the vehicle and received using the power line communication section.

11. The vehicle according to claim 10, further comprising a charge level detection section that detects a charge level of the power storage section,
wherein the power control section transmits information relating to the charge level detected by the charge level detection section to the power source apparatus, using the power line communication section.

12. The vehicle according to claim 10, further comprising:
a third power conversion section that converts power from an alternating current to a direct current;
a fourth power conversion section that converts power from a direct current to an alternating current; and
a switching section that connects either the third power conversion section or the fourth power conversion section to the power line,
wherein the vehicle control section controls the switching section so as to charge the accumulator via the third power conversion section with power supplied from the power line if the control information is charging information, and to feed power of the accumulator to the power line via the fourth power conversion section if the control information is feeding information.

13. The vehicle according to claim 10, further comprising a display section that displays a charge level of the power storage section as a time period for which use is possible in the event of a power cut.

14. The vehicle according to claim 13, wherein the display section decides the time period based on the charge level and a used power setting quantity in a residence.

## Amended claims

### Amended claims under Art. 19.1 PCT

**1.** Currently Amended) A vehicle that can be connected via a power line to a power source apparatus that supplies power to a residence, the vehicle comprising:
a power storage section that can store power supplied from the power source apparatus, and can supply stored power to the power source apparatus;
a vehicle control section that controls power input/output of the power storage section;
a charge level detection section that detects a charge level of the power storage section; and
a display section that displays information on a time period for which use is possible by the residence, corresponding to a charge level of the power storage section.

**2.** Currently Amended) The vehicle according to claim 1, wherein the display section updates and displays the information on a time period for which use is possible by the residence.

**3.** Currently Amended) The vehicle according to claim 1, further comprising:
a memory that stores used power by the residence; and
a charge level conversion section that calculates the time period for which use is possible based on the used power and a charge level of the power storage section.

**4.** Currently Amended) The vehicle according to claim 1, further comprising:
a memory that stores first used power and second used power by the residence; and
a charge level conversion section that calculates a first time period for which use is possible by the residence, corresponding to a charge level of the power storage section, based on the first used power and a charge level of the power storage section, and calculates a second time period for which use is possible by the residence, corresponding to a charge level of the power storage section, based on the second used power and a charge level of the power storage section.

**5.** Currently Amended) The vehicle according to claim 3, further comprising a power line communication section that reports the time period for which use is possible calculated by the charge level conversion section to the power source apparatus via the power line.

**6.** Currently Amended) The vehicle according to claim 5, wherein:
the power line communication section receives control information transmitted from the power source apparatus via the power line; and
the vehicle control section controls input/output of the power storage section based on the control information, and controls input/output of the power storage section based on control information transmitted from the power source apparatus and received using the power line communication section.

**7.** Currently Amended) The vehicle according to claim 1, further comprising a speech output section that outputs the information on a time period for which use is possible as speech.

**8.** Currently Amended) The vehicle according to claim 1, wherein the charge level detection section detects a charge level of the power storage section when the vehicle has been started.

**9.** Currently Amended) The vehicle according to claim 1, further comprising:
a drive section that drives by means of power from the power storage section; and
a connection section that connects or disconnects between the power storage section and the drive section,
wherein the vehicle control section controls the connection section based on a state of the drive section.

**10.** Currently Amended) A power backup system comprising a power source apparatus that supplies power to a residence and a vehicle that can be connected to the power source apparatus via a power line, wherein:
the vehicle has:
a power storage section that can store power supplied from the power source apparatus via the power line, and can supply stored power to the power source apparatus via the power line;
a vehicle control section that controls power input/output of the power storage section;
a charge level detection section that detects a charge level of the power storage section;
a memory that stores used power by the residence;
a charge level conversion section that calculates a time period for which use is possible by the residence, corresponding to a charge level of the power storage section, based on the used power and a charge level of the power storage section;
a display section that displays information on the time period for which use is possible; and
a second power line communication section that transmits information on the time period for which use is possible via the power line; and
the power source apparatus has a first power line communication section that receives information on the time period for which use is possible via the power line,
the power backup system further comprising a display apparatus provided outside the vehicle that is electrically connected to the power source apparatus and displays information on the time period for which use is possible.

**11.** Currently Amended) The power backup system according to claim 10, wherein:
the power source apparatus further comprises a power cut detection section that detects an interruption of power of the residence;
the first power line communication section reports control information controlling the power storage section based on a detection result of the power cut detection section to the vehicle control section via the power line and the second power line communication section; and
the vehicle control section controls input/output of the power storage section based on the control information.

**12.** Currently Amended) The power backup system according to claim 10, wherein the power source apparatus further comprises:
a power conversion section that converts power from a direct current to an alternating current via the power line and supplies converted power to the vehicle, and that is electrically connected between the first power line communication section and the vehicle; and
a bypass element that is connected in parallel to the power conversion section, and that is for passing a power line communication signal.

**13.** Canceled)

**14.** Canceled)
